# EUROPÄISCHE PATENTSCHRIFT

(11) **EP 0 773 397 B1**
(45) Veröffentlichungstag und Bekanntmachung des Hinweises auf die Patenterteilung: **09.09.1998**
(21) Anmeldenummer: 96117939.7
(22) Anmeldetag: 08.11.1996
(51) Int. Cl.: F16L 3/24

(54) **Rohrhalterung**
Pipe support
Support de conduite

(30) Priorität: 11.11.1995 DE 19542127
(43) Veröffentlichungstag der Anmeldung: 14.05.1997
(73) Patentinhaber: Witzenmann GmbH Metallschlauch-Fabrik Pforzheim, D-75175 Pforzheim (DE)
(72) Erfinder: Berger, Peter W., 75181 Pforzheim-Eutingen (DE)
(74) Vertreter: Lemcke, Rupert, Dipl.-Ing.

(56) Entgegenhaltungen:
- EP-A- 0 456 851
- DE-A- 3 820 290
- DE-C- 4 435 556
- DE-U- 9 206 803
- DE-U- 9 407 484
- DE-U-29 513 823

## Beschreibung

Die Erfindung betrifft eine Rohrhalterung zum Festspannen an Profilträgern mit einem an einer Fläche eines Profilträgerflansches anliegenden und durch ein am Profilträger widergelagertes Spannelement wenigstens mittelbar mit der einen Kante des Profilträgerflansches verspannbaren Auflageteil für das Rohr und einem mit dem Auflageteil in Verbindung stehenden, gegebenenfalls das Rohr umgreifenden Halteelement.

Bei einer derartigen bekannten Rohrhalterung sind zwei Klemmbacken durch eine Spannschraube miteinander verbunden, die je um eine Kante eines Profilträgerflansches greifen (siehe z.B. DE-U-295 13 823). Auf einer Klemmbacke ist ein schalenförmiges Teil als Auflager für das Rohr angeorcnet, indem es mit der Klemmbacke verschweißt oder einstückig als Gußteil verbunden ist. Umgriffen wird das Rohr von einem Rundbügel, dessen Enden mit einem Gewinde versehen sind, durch Bohrungen seitlicher Verlängerungen des schalenförmigen Teiles ragen und auf der rohrabgewandten Seite der Verlängerungen aufgesetzte Befestigungsnuten tragen, durch die der Rundbügel gegen das Rohr und damit das Rohr gegen das schalenförmige Teil spannbar sind. Diese Bauform einer Rohrhalterung benötigt zwar weniger Teile im Vergleich zu anderen Rohrhalterungen, die beidseits des Rohres je ein Klemmbackenpaar (siehe z.B. DE-U-9 407 484) erfordern. Sie hat jedoch mit der das schalenförmige Teil tragenden Klemmbacke ein verhältnismäßig kompliziertes und in der Herstellung teures Bauteil, das es auch nicht gestattet, ein Rohr beweglich zu haltern, so daß es nicht nur axiale, sondern, auch seitliche Verschiebebewegungen machen kann. Außerdem muß, wie gesagt, der Rundbügel an seinen Enden mit Gewinden versehen werden, um ihn anzubringen. Schließlich hat die Spannschraube eine erhebliche Länge, wenn die Rohrhalterung für verschiedene Breiten eines Trägerflansches brauchbar sein soll, wobei dann je nach Größe einer solchen Breitenausdehnung ein erheblicher Längenabschnitt der Spannschraube nach außen über die Rohrhalterung übersteht und insbesondere die Gefahr von Verletzungen bringt, aber auch sonst störend im Wege stehen kann.

Aufgabe der Erfindung ist es daher, eine Rohrhalterung der eingangs genannten Art mit wenigen Bauteilen einfacher und kostengünstiger so auszubilden, daß komplizierte Herstellungsschritte wie das Zusammenschweißen oder gußtechnische Herstellen komplizierter Bauformen sowie das Anbringen von Gewinde entfallen können, das Rohr je nach Wahl in seiner Längsrichtung und gegebenenfalls auch seitlich verschiebbar oder fest einspannbar gehalten werden kann sowie unterschiedliche Breiten des Trägerflansches mit einer Rohrhalterung ausgerüstet werden können, ohne daß dies zumindest in einem Teil der Fälle zu überstehenden und störenden Bauteilen führt.

Diese Aufgabe ist ausgehend von einer Rohrhalterung der eingangs genannten Art erfindungsgemäß dadurch gelöst, daß sich gegen die Spannwirkung des Spannelementes einerseits das Auflageteil mit dem Halteelement und andererseits wenigstens ein freies Ende des Halteelementes mit der Kante des Profilträgerflansches in formschlüssigem Eingriff befinden.

Diese erfindungsgemäßen Maßnahmen haben die Wirkung, daß allein durch entsprechende Formgebung des Halteelementes das Auflageteil zur dem Spannelement gegenüberliegen Kante des Profilträgerflansches hin festgelegt ist und damit gleichzeitig das Halteelement positioniert und dadurch das Rohr fixiert ist, wobei es durch die Gestaltung des Halteelementes in einfacher Weise möglich ist, dem Rohr axiale und gegebenenfalls auch seitliche Bewegungsfreiheit zu geben.

Damit kann das Auflageteil ein verhältnismäßig einfaches, auf der Fläche des Profilträgerflansches liegendes Teil sein, an dem das Spannelement angreift, was, wie sich noch zeigen wird, so gestaltet werden kann, daß bei unterschiedlichen Breiten des Profilträgerflansches ein überschüssiger Längenabschnitt des Spannelementes im Auflageteil unterkommen kann, ohne daß dies nach außen in Erscheinung tritt.

Ist nach einer vorteilhaften Ausgestaltung des Erfindungsgegenstandes vorgesehen, daß sich das Halteelement im Bereich zwischen formschlüssigem Eingriff am Auflageteil einerseits und Kante des Profilträgerflansches andererseits an der Fläche des Profilträgerflansches in Anlage befindet, so ist gleichzeitig erreicht, daß das Halteelement quasi mit einem Fuß auf der Fläche des Profilträgerflansches festgespannt und damit gegen eine Kippbewegung gesichert ist, die insbesondere durch einen Reibkraftschluß zwischen Rohr und Halteelement verursacht sein kann.

Insgesamt baut so die erfindungsgemäße Rohrhalterung mit nur einem Spannelement einfach und ist vor allem dadurch ausgezeichnet, daß sie nur geringfügig über die Kanten des betroffenen Profilträgerflansches übersteht.

Als zweckmäßig hat es sich erwiesen, daß das Auflageteil als ein Mittel zum formschlüssigen Angriff des Spannelementes aufweisendes klotzförmiges Bauteil aus Metall oder gleitfähigem Kunststoff ausgebildet ist, womit sich eine besonders einfache Gestaltung und damit billige Herstellung ergibt. Besteht das Auflageteil aus gleitfähigem Kunststoff, so erlaubt es selbst bereits eine bewegliche Rohrhalterung mit geringem Reibungswiderstand für die Rohrleitungsbewegungen. Ist dagegen das Auflageteil aus Metall hergestellt, so kann zu diesem Zwecke in dessen dem Rohr zugewandter Oberfläche ein plattenförmiges Teil aus gleitfähigem Kunststoff zur Auflage des Rohres eingesetzt sein. In allen auch nachfolgend noch genannten Fällen ist es zweckmäßig, wenn als gleitfähiger Kunststoff ein Polyamid verwendet wird.

Was die Ausbildung des Spannelementes betrifft, so kann dieses eine mit ihrem Gewinde mit einem Innengewinde des Auflageteils in Eingriff befindliche Spannschraube sein, die mit ihrem dem Auflageteil abgewandten Ende über eine von ihr drehbar durchdrungene Klemmbacke widergelagert ist, welche die andere Kante des Profilträgerflansches umgreift. Hier wird also von der an sich bekannten Kombination einer Spannbacke mit einer drehbar diese durchdringenden Spannschraube Gebrauch gemacht, die je nach Breite des Profilträgerflansches mehr oder weniger weit in das Innengewinde des Auflageteiles eingeschraubt werden kann, ohne daß sich dabei ein störend nach außen in Erscheinung tretender Überstand ergibt.

Besteht bei dieser Gestaltung des Auflageteil aus Kunststoff, so kann aus Festigkeitsgründen vorgesehen sein, daß dessen Innengewinde durch ein in das Auflageteil eingesetztes oder eingeformtes Gewindeteil aus Metall gebildet ist.

Für den Fall, daß das Rohr mit dem Profilträgerflansch verspannt sein soll, so ist es für eine gute Verspannung vorteilhaft, daß das Auflageteil wenigstens ein senkrecht zur Fläche des Profilträgerflansches und damit radial zum Rohr höhenverstellbares Spannteil enthält, und daß das Spannteil einerseits am Rohr und andererseits am Auflageteil oder an der Fläche des Profilträgerflansches in Anlage ist. Dazu kann das Spannteil in einer sich radial zum Rohr erstreckenden und wenigstens zum Rohr hin offenen Ausnehmung des Auflageteiles angeordnet sein.

Für die Ausbildung dieses Spannteiles kann eine Möglichkeit darin bestehen, daß das Spannteil ein parallel zur Längserstreckung des Rohres in der Ausnehmung verschiebbarer Keil ist, daß die Keilfläche des Keiles an einer entsprechenden, durch das Auflageteil gebildeten Gegenfläche in Anlage ist, daß die Keilfläche in Richtung auf das Spannelement und das Rohr ansteigend ausgebildet ist, und daß das Spannelement das Auflageteil frei drehbar durchdringt sowie formschlüssig am Keil angreift.

Eine andere Möglichkeit besteht darin, daß das Spannteil durch zwei parallel zur Längserstreckung des Rohres in der Ausnehmung verschiebbare und radial zum Rohr mit ihren Keilflächen aneinander liegende Keile gebildet ist, daß die miteinander korrespondierenden Keilflächen der Keile in Richtung auf das Spannelement und vom Rohr fort abfallend ausgebildet sind, und daß das Spannelement das Auflageteil frei drehbar durchdringt sowie formschlüssig an dem vom Rohr abgewandten Keil des Spannteiles angreift.

Für beide vorstehend genannten Bauformen kann es vorteilhaft sein, wenn wenigstens der in Anlage am Rohr befindliche Keil aus gleitfähigem Kunststoff ausgebildet ist.

Beide Bauformen haben also gemeinsam, daß durch das Spannelement ein Keil in Längsrichtung des Rohres verschoben wird und damit im Zusammenwirken mit dem Halteelement und dem Auflageteil bzw. dem Profilträgerflansch das Rohr festgespannt wird. Bei der Verschiebebewegung kommt der Keil innerhalb der Ausnehmung des Auflageteiles in Spannrichtung in Anlage an das Auflageteil, so daß dieses durch das Spannelement mitgezogen und somit auch das Halteelement mit der Kante des Profilträgerflansches in festen Eingriff gelangt.

Bezüglich der Gestaltung des Halteelementes kann vorgesehen sein, daß dieses ein Metallbügel mit kreisförmigem oder rechteckigem Materialquerschnitt ist. Auf diese Weise läßt sich das Halteelement aus marktgängigem Stangenmaterial mittels einfachen Biegens eines entsprechenden Längenabschnittes dieses Stangenmaterial herstellen, um dann schon ohne weitere Bearbeitung die Funktion sowohl der Gegenhalterung des Auflageteils als auch der Halterung des Rohres erfüllen zu können.

Andererseits kann zur Herstellung des Formschlusses zwischen dem freien Ende des Halteelementes und der diesem zugeordneten Kante des Profilträgerflansches das freie Ende des Halteelementes die Kante mit einer hakenförmigen Endenausbildung umgreifen, so daß sich auch in dieser Hinsicht selbst für das ohnehin leicht herzustellende Halteelement eine einfache Gestaltung ergibt.

Was die formschlüssige Verbindung des Halteelementes mit dem Auflageteil betrifft, so kann das Halteelement am Auflageteil auf der dem Spannelement zugewandten Seite um wenigstens einen am Auflageteil befindlichen Vorsprung geführt und an diesem unter der Wirkung des Spannelementes in Anlage sein. Auch damit ist eine einfache Gestaltung gewährleistet, denn es bereitet keine besonderen Schwierigkeiten, das klotzförmige Auflageteil mit einem entsprechenden Vorsprung auszustatten. Dies kann vielmehr entweder durch entsprechende Formgebung des Auflageteiles selbst geschehen oder dadurch, daß der Vorsprung durch ein in das Auflageteil eingesetztes Formteil gebildet ist, welches beispielsweise ein in das Auflageteil eingesteckter oder eingeschraubter Bolzen aus Metall sein kann.

Dabei kann es in den genannten Fällen zweckmäßig sein, daß das Halteelement auf der dem Rohr zugewandten Seite des Vorsprunges eine Rückbiegung in Richtung auf seinen formschlüssigen Eingriff mit der Kante des Profilträgerflansches aufweist. Wird nun durch die Spannschraube das Auflageteil gegen die Widerlagerung am Halteelement stramm gezogen, so sorgt die genannte Rückbiegung in Verbindung mit dem Vorsprung des Auflageteiles in besonderem Maße dafür, daß das Auflageteil in Anlage am Profilträgerflansch bleibt.

Die erfindungsgemäße Ausbildung der Rohrhalterung gibt nun aber auch die Möglichkeit, mit annähernd gleichen Bauteilen an bestimmten Stellen dem Rohr nur eine Auflage- bzw. Gleitfläche anzubieten, ohne daß gleichzeitig das Rohr auch vom Halteelement umgriffen wird. Hierzu kann dann einfach der Abschnitt des Halteelementes fortgelassen werden, der sonst das Rohr umgreift, womit aber die Teile des Halteelementes bleiben, die den Vorsprung des Auflageteils einerseits und die zugeordnete Kante des Profilträgerflansches andererseits umfassen. Eine andere Gestaltung ist in diesem Falle dadurch möglich, daß das Halteelement mit wenigstens einem quer zur Spannwirkung des Spannelementes gerichteten Fortsatz in eine dazu passende Bohrung des Auflageteiles eingreift. Hier wird also der Vorsprung des Auflageteils an diesem durch eine entsprechende Bohrung ersetzt, in die dann das Halteelement mit dem genannten Fortsatz eingreift.

Schließlich kann vorgesehen sein, daß das Halteelement am Auflageteil auch gegen Verschiebung quer zur Spannwirkung des Spannelementes gesichert ist, was zum Beispiel dadurch geschehen kann, daß der Vorsprung des Auflageteils das Halteelement quer zur Spannrichtung des Spannelementes wenigstens teilweise umgreift.

Weitere Merkmale und Einzelheiten der Erfindung ergeben sich aus der nachfolgenden Beschreibung von Ausführungsformen, die auf der Zeichnung dargestellt sind. In der Zeichnung zeigen:
- Figur 1: eine erste Ausführungsform einer Rohrhalterung in Axialrichtung des Rohres gesehen;
- Figur 2: die Seitenansicht der Ausführungsform gemäß Figur 1;
- Figur 3, 5 und 7: weitere Ausführungsformen einer Rohrhalterung in der Darstellung gemäß Figur 2;
- Figur 4: die Ausführungsform gemäß Figur 3 in der Darstellung gemäß Figur 1;
- Figur 6: eine Abwandlung der Ausführungsform nach Figur 3 und 4 in der Darstellung gemäß Figur 4;
- Figuren 8 bis 11: konstruktive Einzelheiten zur Ausgestaltung der Rohrhalterung;
- Figuren 12 und 13: die Ausgestaltung einer Rchrhalterun für frei bewegliche Rohre in Axialrichtung des Rohres und quer dazu gesehen;
- Figur 14: eine Abwandlung der Gestaltung nach Figur 13; und
- Figur 15: eine Rohrhalterung mit Verspannung des Rchres.

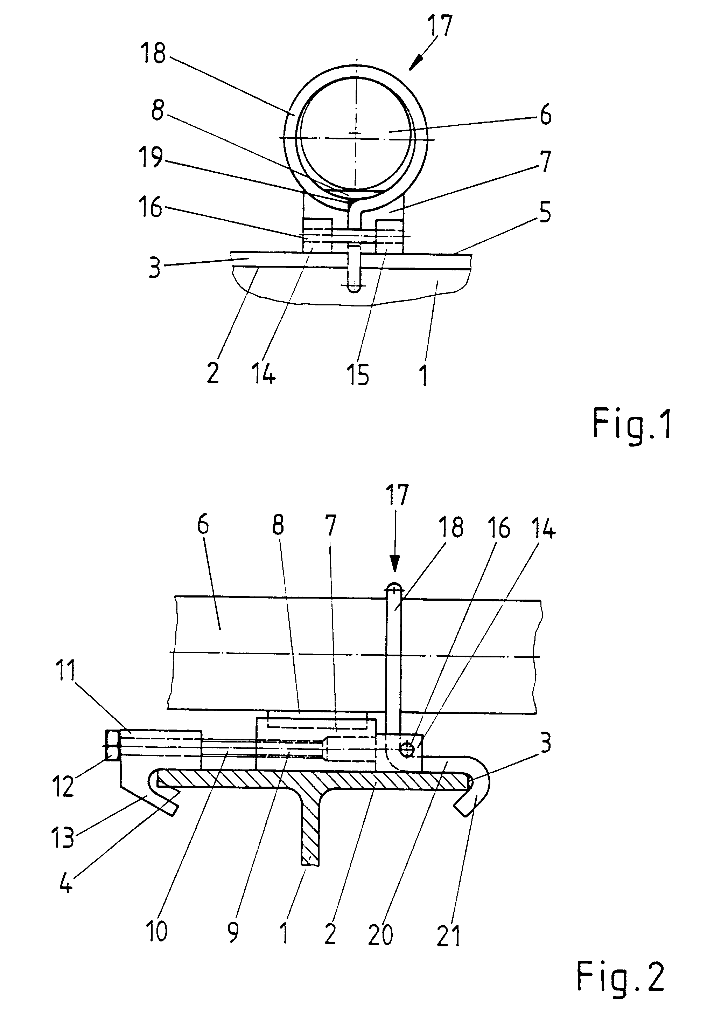

Bei der in den Figuren 1 und 2 vereinfacht dargestellten Bauform des Erfindungsgegenstandes ist ein Profilträger 1 mit einem Profilträgerflansch 2 ersichtlich, der Kanten 3, 4 und eine Oberfläche 5 aufweist. Diese Bezifferung wird auch bei der Beschreibung der weiteren Figuren beibehalten.

Auf den Profilträgerflansch 2 ist zur Halterung eines Rohres 6 ein Auflageteil 7 in Form eines im wesentlichen rechteckigen Klotzes aus Metall angeordnet, auf dem das Rohr 6 über ein plattenförmiges Teil 8 aus Polyamid aufliegt, wobei das Teil 8 in eine entsprechende Ausnehmung des Auflageteils 7 eingesetzt ist.

Das Auflageteil 7 weist etwa mittig eine zur Fläche 5 parallele Gewindebohrung 9 auf, in die eine Spannschraube 10 eingedreht ist. Die Spannschraube 10 ist drehbar in einer Klemmbacke 11 geführt und gegen diese mit ihrem Kopf 12 widergelagert, indem die Klemmbacke 11 die Kante 4 des Profilträgerflansches 2 mit einer Verlängerung 13 umgreift.

Auf der der Spannschraube 10 gegenüberliegenden Seite hat das Auflageteil 7 beidseits seiner Mitte zwei sich in Richtung der Spannschraube 10 erstreckende und einen gegenseitigen Abstand aufweisende Vorsprünge 14, 15, die über entsprechende Bohrungen einen Bolzen 16 aus Metall tragen, der parallel zur Fläche 5 des Profilträgerflansches 2 und quer zur Längserstreckung der Spannschraube 10 angeordnet ist.

Auf der der Spannschraube 10 zugewandten Seite ist der Bolzen 16 von einem das Rohr 6 umgreifenden Halteelement 17 hintergriffen. Das Halteelement 17 ist aus einem entsprechenden Abschnitt einer Metallstange mit Kreisquerschnitt gebogen. Es bildet einen das Rohr 6 umfassenden Rundbügel 18, der durch eine Verschweißung 19 fest geschlossen ist und einen Innendurchmesser aufweist, der größer als der Außendurchmesser des Rohres 6 ist. Auf diese Weise kann der Rundbügel 18 leicht auf das Rohr 6 aufgesetzt werden.

An den Rundbügel 18 schließt sich ein freies Ende 20 des Halteelementes 17 an, das hinter dem Bolzen 16 hindurchgeführt ist, dann über einen Teil seiner Länge in Anlage an der Fläche 5 des Profilträgerflansches 2 ist und schließlich in einem Haken 21 ausläuft, der die Kante 3 des Profilträgerflansches 2 umgreift.

Wird nun bei der so beschriebenen Konstruktion die Spannschraube 10 angezogen, so wird die Rohrhalterung auf dem Profilträgerflansch 2 mittels der Klemmbacke 11 einerseits und dem Haken 21 andererseits festgeklemmt, wobei die Spannverbindung zwischen Klemmbacke 11 und Haken 21 über die Spannschraube 10, das Auflageteil 7, den Bolzen 16 und das Halteelement 17 gegeben ist. Soweit der Prcfilträgerflansch 2 je nach den Gegebenheiten bezogen auf Figur 2 unterschiedliche Breite, kann eine an sich nicht benötigte Länge der Spannschraube 10 im Inneren des Auflageteils 7 unterkommen. Was die Halterung des Rohres 6 an sich betrifft, so kann diese durch entsprechende Gestaltung des Rundbügels 18 den Anforderungen entsprechend eingerichtet werden.

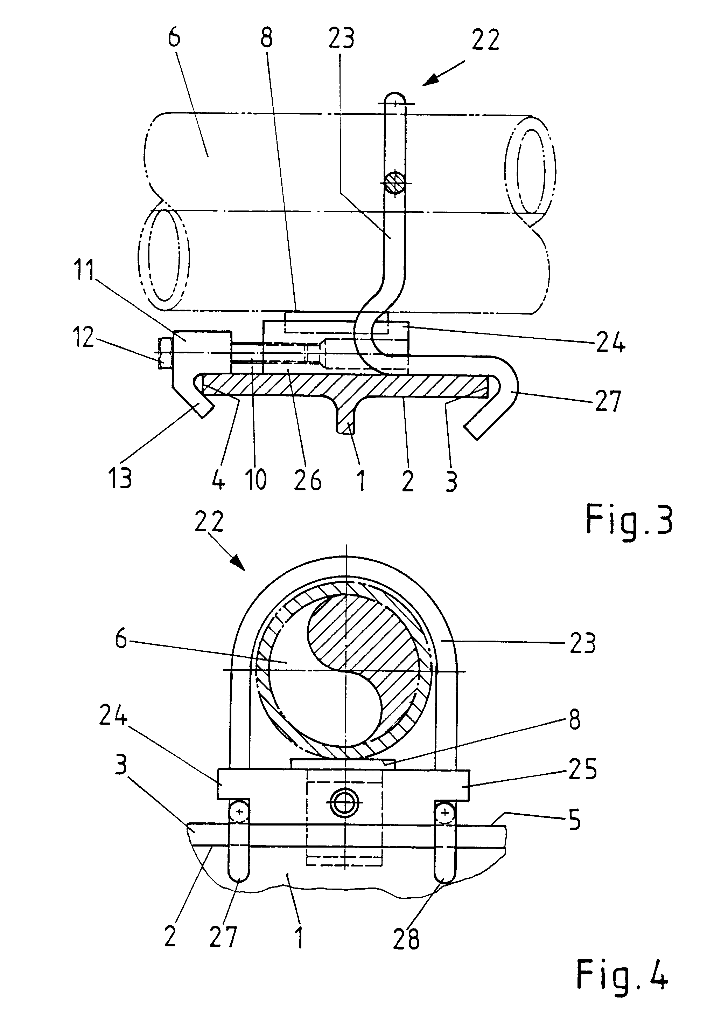

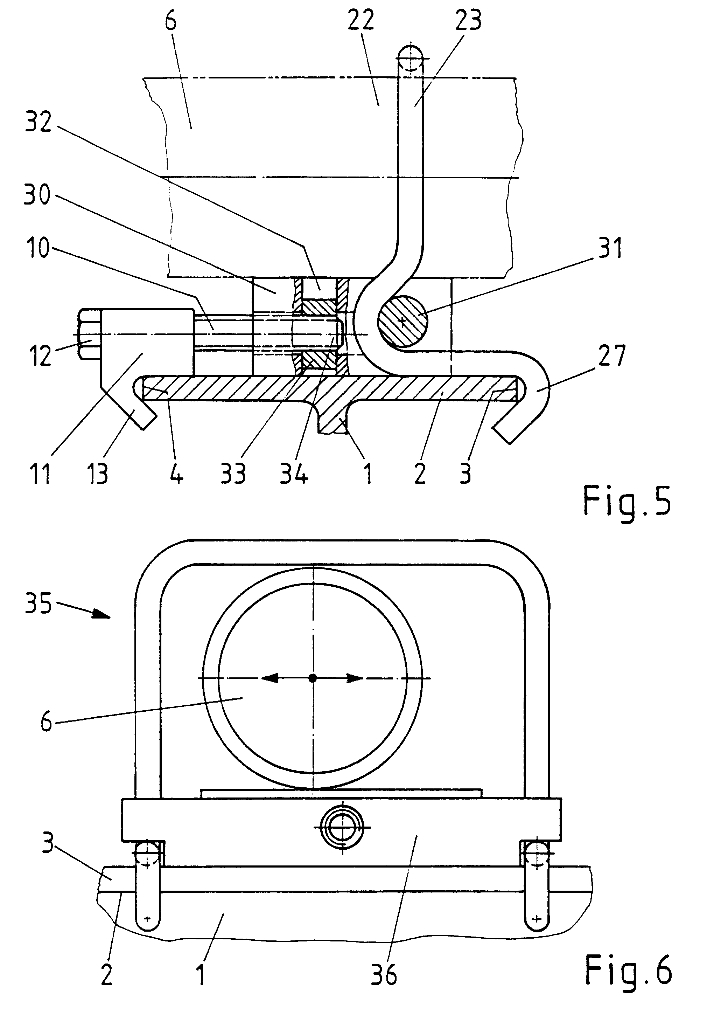

Die Figuren 3 und 4 zeigen eine Abwandlung des beschriebenen Gegenstandes, wobei wiederkehrende Teile mit der bereits eingeführten Bezifferung versehen und nicht noch einmal im einzelnen beschrieben sind. Die Abwandlung besteht im wesentlichen darin, daß ein Halteelement 22 das Rohr 6 mit einem im wesentlichen U-förmigen Bügel 23 umfaßt, dessen beide Enden um seitliche Vorsprünge 24, 25 des Auflageteils 26 geführt sind, von da aus wieder entlang der Fläche 5 des Profilträgerflansches 2 verlaufen und zum Schluß zwei Haken 27, 23 bilden, die um die Kante 3 des Profilträgerflansches 2 fassen. Auch hier ist das Halteelement 22 wieder aus Stangenmaterial mit Kreisquerschnitt gebogen und die Größe des Bügels 23 den Anforderungen entsprechend bemessen.

Wie ersichtlich, haben die Vorsprünge 24, 25 auf ihrer der Spannschraube 10 zugewandten Seite eine kreisförmige Außenkontur, um die das Halteelement 22 mit einem entsprechend bogenförmigen Verlauf geführt ist. Dadurch ergibt sich eine gewisse Spannwirkung für das Halteelement 22 in Richtung auf die Fläche 5 des Profilträgerflansches 2.

Mit der bereits anhand der Figuren 1 und 2 beschriebenen und auch hier wieder ersichtlichen Auflage des Halteelementes 22 auf der Fläche 5 des Profilträgerflansches 2 im Bereich zwischen Vorsprüngen des Auflageteils und endständigen Haken 21 bzw. 27, 28 ist für das Halteelement im übrigen eine hohe Standfestigkeit bzw. Sicherheit gegen Kippen in Axialrichtung des Rohres 6 gegeben. Dies gilt entsprechend auch für die anhand der Figuren 5 bis 7 zu schildernden weiteren Ausführungsformen.

Die Ausführungsform nach Figur 5 unterscheidet sich von der nach Figur 3 und 4 dadurch, daß nunmehr das Auflageteil 30 selbst aus Kunststoff besteht. Um hier für die notwendigen Stabilitäten zu sorgen, ist zur Bildung der seitlichen Vorsprünge 31 in das Auflageteil 30 quer zur Längsrichtung des Rohres 6 ein zylindrischer Metallbolzen eingesetzt, der bezogen auf die Darstellung in Figur 5 vorne und hinten entsprechend über der Breite des Auflageteils 30 übersteht.

In gleicher Weise ist zur Bildung des Innengewindes für die Spannschraube 10 in eine entsprechende Ausnehmung 32 des Auflageteils 30 ein Metallklotz 33 eingesetzt, der das Innengewinde 34 enthält.

Im vorliegenden Falle ist der Metallklotz 33 von oben bzw. von unten in die Ausnehmung 32 eingesetzt. Gleichermaßen könnte sich die Ausnehmung 32 natürlich auch senkrecht zur Zeichenebene der Figur 5 erstrecken, so daß dann der Metallklotz 33 seitlich in das Auflageteil 30 einzustecken wäre.

Figur 6 zeigt eine Variante der Ausführungsform nach den Figuren 3 und 4 dahingehend, daß das Halteelement 35 und entsprechend auch das Auflageteil 36 quer zur Längsrichtung des Rohres 6 breiter ausgebildet sind, wodurch dem Rohr in der ersichtlichen Weise auch eine seitliche Bewegungsfreiheit gegeben werden kann.

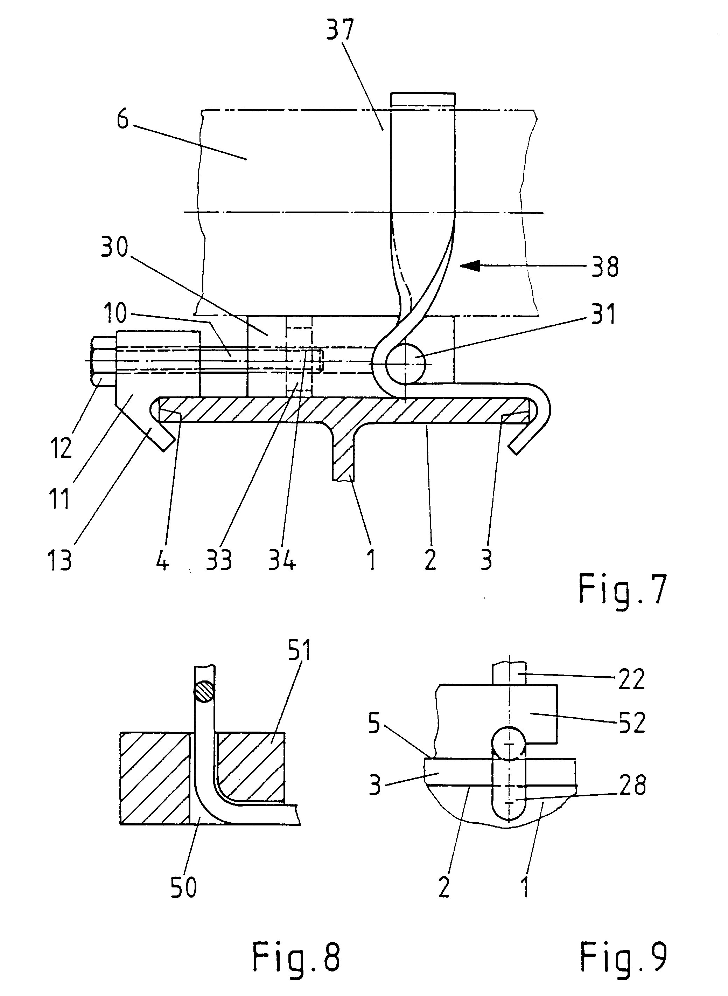

Bei der Ausführungsform nach Figur 7 wird wieder von der Bauform nach Figur 5 ausgegangen. Hier ist jedoch das Halteelement 37 aus Stangenmaterial mit rechteckigem Querschnitt gebogen. Damit in diesem Falle eine flächige Anlage gegenüber dem Rohr 6 einerseits und den Vorsprüngen 31 bzw. der Fläche 5 des Profilträgerflansches 2 andererseits zustande kommt, ist das Material des Halteelementes 37 bei 38 in sich um 90° verdreht.

Figur 8 zeigt ausschnittweise die Formschlußverbindung zwischen einem Halteelement und einem Auflageteil. Während bei den bisherigen Ausführungsformen das Auflageteils zum Beispiel mit seitlichen Vorsprüngen versehen war, hat es nach Figur 8 seitlich aus Ausnehmungen 50, durch die Vorsprünge 51 stehen bleiben, andererseits aber das Material des Halteelementes im seitlichen Außenquerschnitt des Auflageteils verschwindet.

Figur 9 zeigt, daß ein seitlicher Vorsprung 52 ähnlich beispielsweise den Vorsprüngen 24 ,25 nach Figur 3 und 4 auch an seinem freien Ende teilweise in Richtung auf die Fläche 5 des Profilträgerflansches 2 um das Material des Halteelementes 22 zurückgeführt sein kann, um ein seitliches Verschieben der betroffenen Teiles des Halteelementes 22 an den Vorsprüngen 52 auch nach außerhalb des Auflageteils zu verhindern.

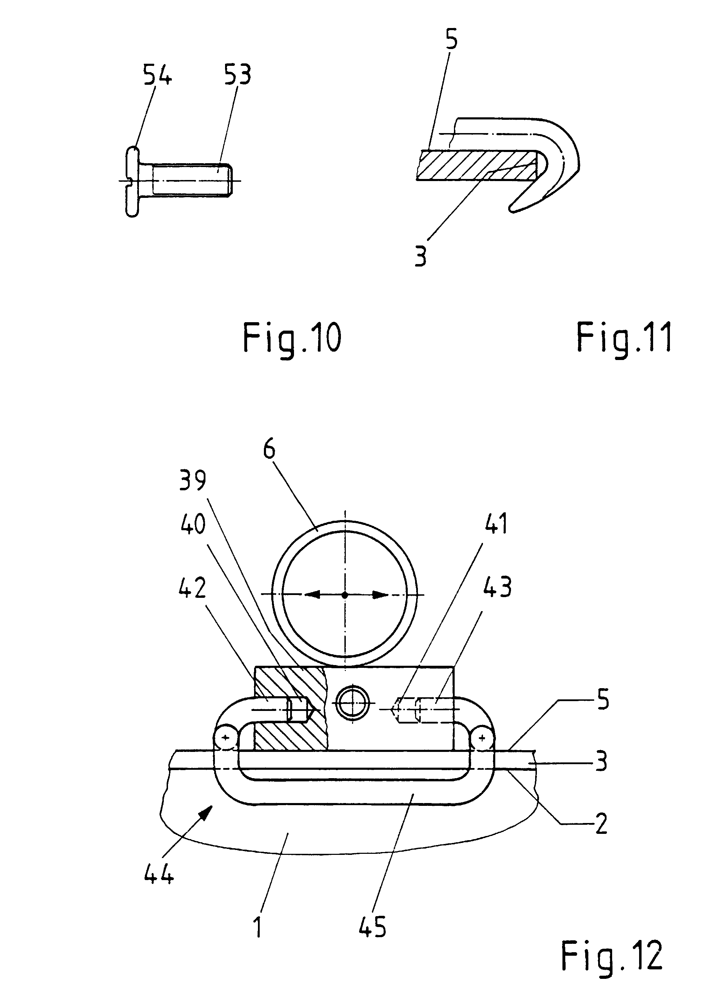

Figur 10 zeigt eine solche Seitenführung auch für die Vorsprünge 31 nach Figur 5. Hier ist dann zur Bildung der Vorsprünge in das Auflageteil ein Bolzen 53 eingeschraubt, der an seinem freien Ende eine radiale Verdickung 54 aufweist, die ein seitliches Verschieben des Halteelementes verhindert.

Figur 11 zeigt ein Beispiel dafür, daß das freie Ende eines vom Halteelement gebildeten Hakens aus Gründen der Material- und Platzersparnis auch spitz zulaufend ausgebildet sein kann.

Die beschriebenen Rohrhalterungen eignen sich gleichermaßen auch für die Fälle, bei denen das Rohr durch das Halteelement nicht umfaßt, vielmehr auf dem Auflageteil frei beweglich sein soll. Dazu wären bei den geschilderten Ausführungsformen jeweils nur die Teile des Halteelementes fortzulassen, die um das Rohr führen. Dies ist ersichtlich ohne weiteres möglich, ohne daß sich dadurch an der geschilderten Aufspannbarkeit der Rohrhalterung im übrigen etwas ändert.

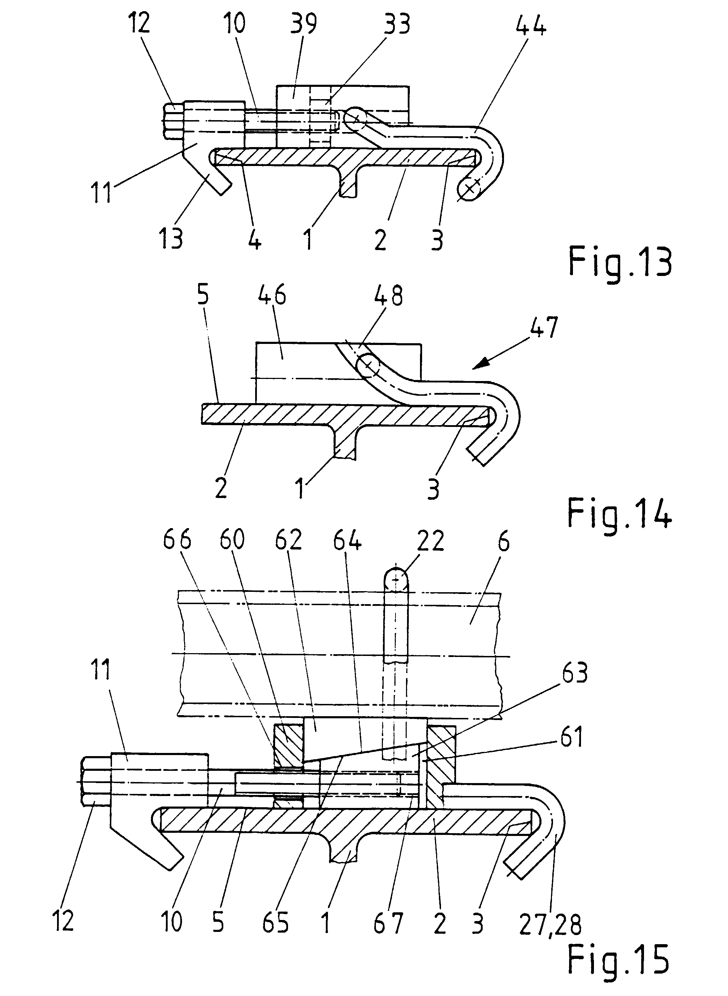

Für diese Fälle ist aber auch eine vereinfachte Konstruktion möglich, wie sie beispielsweise anhand der Figuren 12 und 13 beschrieben ist, die als Abwandlung der Bauform gemäß Figur 5 betrachtet werden kann. Entsprechend besteht hier das Auflageteil 39 wieder aus Kunststoff und enthält das Innengewinde in der geschilderten Weise über einen eingesetzten Metallklotz 33.

Andererseits ist das Auflageteil 39 an beiden Seiten mit sich parallel zur Fläche 5 des Profilträgerflansches 2 und senkrecht zur Längsrichtung des Rohres 6 erstreckenden Sackbohrungen 40, 41 versehen, in die die entsprechend abgebogenen Enden 42, 43 eines Halteelementes 44 eingesteckt sind. Von hier aus verläuft das Halteelement 44 in der bereits geschilderten Weise unter Hakenbildung um die Kante 3 des Profilträgerflansches 2, wobei dann aber die beiden Hakenenden in eine Verbindung 45 übergehen, um für das Halteelement 44 eine einteilige Bauform zu ermöglichen.

Figur 14 zeigt eine Abwandlung zur Bauform nach Figur 12 und 13. Hier sind die beiden in das Auflageteil 46 ragenden Enden des Halteelementes 47 miteinander verbunden und sitzen in einer nach oben offenen, entgegen der Spannwirkung der Spannschraube nach unten schräg gestellten Nut 48, während die freien Enden dieses Halteelementes dann wieder unter Hakenbildung um die Kante 3 des Profilträgerflansches 2 geführt sind.

Bei den bisher geschilderten Bauformen des Erfindungsgegenstandes ist das Rohr 6 in seiner Längsrichtung und gegebenenfalls auch quer dazu im wesentlichen frei verschiebbar. Es gibt jedoch auch Anwendungsfälle, bei denen eine feste Verspannung des Rohres 6 mit dem Profilträgerflansch 2 und damit mit dem Profilträger 1 erfolgen soll. Um dies zu ermöglichen, kann eine Gestaltung nach Figur 15 vorgenommen werden.

Wie aus Figur 15 ersichtlich, weist hier ein Auflageteil 60 eine vertikal durchgehende und rundum durch das Auflageteil umschlossene Ausnehmung 61 auf, in der ein aus zwei Keilen 62, 63 gebildetes Spannelement angeordnet ist. Die Keile 62 und 63 liegen mit ihren Keilflächen 64 bzw. 65 aneinander, wobei diese Keilflächen in Richtung der Spannschraube 10 verlaufen und sich in Richtung des Spannschraubenkopfes 12 vom Rohr 6 entfernen.

Außerdem ist das Auflageteil 60 für die Spannschraube 10 mit einer Durchgangsbohrung 66 versehen, in der sich die Spannschraube 10 frei drehen kann. Demgegenüber ist der untere Keil 63 mit einem Innengewinde 67 versehen, in das das Gewinde der Spannschraube 10 eingreift.

Was im übrigen die Ausbildung eines Halteelementes 22 und dessen Verbindung mit dem Auflageteil 60 betrifft, so kann diese beispielsweise gemäß Figur 3 und 4 ausgebildet sein. Aber auch die anderen vorbeschriebenen Ausführungsformen lassen sich entsprechend hier anwenden.

Wird nun bei der Bauform gemäß Figur 15 die Spannschraube 10 angezogen, so wird der Keil 63 bezogen auf Figur 15 von rechts nach links verschoben, wodurch er den Keil 62 nach links in Anlage an die dortige Wand der Ausnehmung 61 und damit an das Auflageteil 60 bringt und danach in Richtung auf das Rohr 6 verschiebt solange, bis über die Abstützung des Keiles 63 auf der Fläche 5 des Profilträgerflansches 2 das Rohr 6 zwischen Halteelement 22 und Keil 62 bzw. Profilträgerflansch 2 verspannt ist und damit fest sitzt.

Durch die beim Anziehen der Spannschraube 10 zunächst erfolgte Anlage des Keiles 62 gegen das Auflageteil 60 ist letzteres vorher solange bezogen auf Figur 15 nach links mitgenommen worden, daß sich die Haken 27, 28 des Halteelementes 22 in festem Eingriff mit der Kante 3 des Profilträgerflansches 2 befinden. Erst wenn dieser anhand der frühreren Figuren bereits näher erläuterte Eingriff hergestellt ist, wird der Keil 62 sich bezogen auf Figur 15 von unten nach oben gegen das Rohr 6 bewegen und letzteres spannen.

Zweckmäßig kann der Keil 62 aus gleitfähigem Kunststoff bestehen. Der Keil 63 kann dagegen ohne weiteres aus Metall gefertigt sein. Soll jedoch auch hier Kunststoff als Material verwendet werden, so empfiehlt es sich, das Innengewinde 67 gleichermaßen durch eine eingesetzte Metallbüchse oder ein sonstiges, in den Keil 63 eingesetztes oder eingegossenes Metallteil zu bilden, wie dies bereits beim Gegenstand der Figur 5 der Fall war und dort beschrieben wurde.

## Patentansprüche

1. Rohrhalterung zum Festspannen an Profilträgern mit einem an einer Fläche eines Profilträgerflansches anliegenden und durch ein am Profilträger widergelagertes Spannelement wenigstens mittelbar mit der einen Kante des Profilträgerflansches verspannbaren Auflageteil für das Rohr und einem mit dem Auflageteil in Verbindung stehenden, gegebenenfalls das Rohr umgreifenden Halteelement,
dadurch gekennzeichnet,
daß sich gegen die Spannwirkung des Spannelementes (10) einerseits das Auflageteil (7, 26, 30, 36, 33, 46, 60) mit dem Halteelement (17, 22, 35, 37, 44, 47) und andererseits wenigstens ein freies Ende des Halteelementes (17, 22, 35, 37, 44, 47) mit der Kante (3) des Profilträgerflansches (2) in formschlüssigem Eingriff befinden.

2. Rohrhalterung nach Anspruch 1,
dadurch gekennzeichnet,
daß sich das Halteelement (17, 22, 35, 37, 44, 47) im Bereich zwischen formschlüssigem Eingriff am Auflageteil (7, 26, 30, 36, 39, 46, 60) einerseits und Kante (3) des Profilträgerflansches (2) andererseits an der Fläche (5) des Profilträgerflansches (2) in Anlage befindet.

3. Rohrhalterung nach Anspruch 1 oder 2,
dadurch gekennzeichnet,
daß das Auflageteil (7, 26, 30, 36, 39, 46, 60) als ein Mittel zum formschlüssigen Angriff des Spannelementes (10) aufweisendes, klotzförmiges Bauteil aus Metall oder gleitfähigem Kunststoff ausgebildet ist.

4. Rohrhalterung nach einem oder mehreren der Ansprüche 1 bis 3,
dadurch gekennzeichnet,
daß bei einem Auflageteil (7, 26, 36) aus Metall in dessen dem Rohr (6) zugewandter Oberfläche ein plattenförmiges Teil (8) aus gleitfähigem Kunststoff zur Auflage des Rohres (6) eingesetzt ist.

5. Rohrhalterung nach einem oder mehreren der Ansprüche 1 bis 4,
dadurch gekennzeichnet,
daß das Spannelement eine mit ihrem Gewinde in einem Innengewinde (9, 34, 67) des Auflageteils (7, 26, 30, 36, 39, 46, 60) in Eingriff befindliche Spannschraube (10) ist, daß die Spannschraube (10) mit ihrem dem Auflageteil (7, 26, 30, 36, 39, 46, 60) abgewandten Ende über eine von ihr drehbar durchdrungene Klemmbacke (11) wiedergelagert ist und daß die Klemmbacke (11) die andere Kante (4) des Profilträgerflansches (2) umgreift.

6. Rohrhalterung nach einem oder mehreren der Ansprüche 1 bis 5,
dadurch gekennzeichnet,
daß bei einem Auflageteil (30, 39, 46) aus Kunststoff dessen Innengewinde (34) durch ein in das Auflageteil (30, 39, 46) eingesetztes oder eingeformtes Gewindeteil (33) aus Metall gebildet ist.

7. Rohrhalterung nach einem oder mehreren der Ansprüche 1 bis 6,
dadurch gekennzeichnet,
daß das Auflageteil (60) wenigstens ein senkrecht zur Fläche (5) des Profilträgerflansches (2) und damit radial zum Rohr (6) höhenverstellbares Spannteil (62, 63) enthält, und daß das Spannteil (62, 63) einerseits am Rohr (6) und andererseits am Auflageteil oder an der Fläche (5) des Profilträgerflansches (2) in Anlage ist.

8. Rohrhalterung nach einem oder mehreren der Ansprüche 1 bis 7,
dadudrch gekennzeichnet,
daß das Spannteil (62, 63) in einer sich radial zum Rohr (6) erstreckenden und wenigstens zum Rohr (6) hin offenen Ausnehmung (61) des Auflageteiles (60) angeordnet ist.

9. Rohrhalterung nach einem oder mehreren der Ansprüche 1 bis 8,
dadurch gekennzeichnet,
daß das Spannteil ein parallel zur Längserstreckung des Rohres (6) in der Ausnehmung verschiebbarer Keil ist, daß die Keilfläche des Keiles an einer entsprechenden, durch das Auflageteil gebildeten Gegenfläche in Anlage ist, daß die Keilfläche in Richtung auf das Spannelement (10) und das Rohr (6) ansteigend ausgebildet ist, und daß das Spannelement (10) das Auflageteil frei drehbar durchdringt sowie formschlüssig am Keil angreift.

10. Rohrhalterung nach einem oder mehreren der Ansprüche 1 bis 8,
dadurch gekennzeichnet,
daß das Spannteil durch zwei parallel zur Längserstreckung des Rohres (6) in der Ausnehmung (61) verschiebbare und radial zum Rohr (6) mit ihren Keilflächen (64, 65) aufeinanderliegende Keile (62, 63) gebildet ist, daß die miteinander korrespondierenden Keilflächen (64, 65) der Keile (62, 63) in Richtung auf das Spannelement (10) und vom Rohr (6) fort abfallend ausgebildet sind, und daß das Spannelement (10) das Auflageteil (60) frei drehbar durchdringt sowie formschlüssig an dem vom Rohr (6) abgewandten Keil (63) des Spannteiles angreift.

11. Rohrhalterung nach einem oder mehreren der Ansprüche 1 bis 10,
dadurch gekennzeichnet,
daß wenigstens der in Anlage am Rohr (5) befindliche Keil (62) aus gleitfähigem Kunststoff ausgebildet ist.

12. Rohrhalterung nach einem oder mehreren der Ansprüche 1 bis 11,
dadurch gekennzeichnet,
daß der gleitfähige Kunststoff ein Polyamid ist.

13. Rohrhalterung nach einem oder mehreren der Ansprüche 1 bis 12,
dadurch gekennzeichnet,
daß das Halteelement (17, 22, 35, 37, 44, 47) ein Metallbügel mit kreisförmigem oder rechteckigem Materialquerschnitt ist.

14. Rohrhalterung nach einem oder mehreren der Ansprüche 1 bis 13,
dadurch gekennzeichnet,
daß das freie Ende des Halteelementes (17, 22, 35, 37, 44, 47) die Kante (3) des Profilträgerflansches (2) mit einer hakenförmigen Endenausbildung (21, 27, 28) umgreift.

15. Rohrhalterung nach einem oder mehreren der Ansprüche 1 bis 14,
dadurch gekennzeichnet,
daß das Halteelement (17, 22, 35, 37) am Auflageteil (7, 26, 30, 36, 60) auf der dem Spannelement (10) zugewandten Seite um wenigstens einen am Auflageteil (7, 26, 30, 36) befindlichen Vorsprung (16, 24, 25, 31, 51, 52) geführt und an diesem unter der Wirkung des Spannelementes (10) in Anlage ist.

16. Rohrhalterung nach Anspruch 15,
dadurch gekennzeichnet,
daß der Vorsprung (24, 25, 51, 52) durch entsprechende Formgebung des Auflageteils (26, 36, 60) gebildet ist.

17. Rohrhalterung nach einem oder mehreren der Ansprüche 1 bis 15,
dadurch gekennzeichnet,
daß der Vorsprung (16, 31) durch ein in das Auflageteil (7, 30) eingesetztes Formteil gebildet ist.

18. Rohrhalterung nach Anspruch 17,
dadurch gekennzeichnet,
daß das Formteil ein in das Auflageteil (7, 30) eingesteckter oder eingeschraubter Bolzen (16, 53) aus Metall ist.

19. Rohrhalterung nach einem oder mehreren der Ansprüche 1 bis 18,
dadurch gekennzeichnet,
daß das Halteelement (22, 35, 37) auf der dem Rohr (6) zugewandten Seite des Vorsprunges (24, 25, 31) eine Rückbiegung in Richtung auf seinen formschlüssigen Eingriff mit der Kante (3) des Profilträgerflansches (2) aufweist.

20. Rohrhalterung nach einem oder mehreren der Ansprüche 1 bis 14,
dadurch gekennzeichnet,
daß das Halteelement (44, 47) mit wenigstens einem quer zur Spannwirkung des Spannelementes (10) gerichteten Fortsatz (42, 43) in eine dazu passende Bohrung (40, 41) oder Ausnehmung (43) des Auflageteils (39, 46) eingreift.

21. Rohrhalterung nach einem oder mehreren der Ansprüche 1 bis 20,
dadurch gekennzeichnet,
daß das Halteelement (22) am Auflageteil gegen Verschiebung quer zur Spannwirkung des Spannelementes (10) gesichert ist (Figur 9 und 10).

22. Rohrhalterung nach Anspruch 21,
dadurch gekennzeichnet,
daß der Vorsprung (52, 53) des Auflageteils das Halteelement (22) quer zur Spannrichtung des Spannelements (10) wenigstens teilweise umgreift.

## Claims

1. Pipe bracket for securing to sectional beams with a bearing part for the pipe, which part lies against a face of a sectional beam flange and can be fastened at least indirectly to one edge of the sectional beam flange by a clamping element, which is supported at the sectional beam, and with a holding element, which is connected to the bearing part and may embrace the pipe, characterised in that the bearing part (7, 26, 30, 36, 39, 46, 60) is positively engaged with the holding element (17, 22, 35, 37, 44, 47) on one side and at least one free end of the holding element (17, 22, 35, 37, 44, 47) is positively engaged with the edge (3) of the sectional beam flange (2) on the other side against the clamping action of the clamping element (10).

2. Pipe bracket according to claim 1, characterised in that the holding element (17, 22, 35, 37, 44, 47) lies against the face (5) of the sectional beam flange (2) in the region between the positive engagement at the bearing part (7, 26, 30, 36, 39, 46, 60) on one side and the edge (3) of the sectional beam flange (2) on the other.

3. Pipe bracket according to claim 1 or 2, characterised in that the bearing part (7, 26, 30, 36, 39, 46, 60) is formed as a block-shaped component consisting of metal or a slidable plastics material and comprising means for the positive action of the clamping element (10).

4. Pipe bracket according to one or more of claims 1 to 3, characterised in that, when the bearing part (7, 26, 36) consists of metal, a plate-shaped part (8) of a slidable plastics material is inserted in its surface which faces the pipe (6) to bear the pipe (6).

5. Pipe bracket according to one or more of claims 1 to 4, characterised in that the clamping element is a clamping bolt (10) which is engaged via its thread with an internal thread (9, 34, 67) of the bearing part (7, 26, 30, 36, 39, 46, 60), that the clamping bolt (10) is supported by way of its end which is remote from the bearing part (7, 26, 30, 36, 39, 46, 60) via a gripping jaw (11), which it penetrates in a rotatable manner, and that the gripping jaw (11) embraces the other edge (4) of the sectional beam flange (2).

6. Pipe bracket according to one or more of claims 1 to 5, characterised in that, when the bearing part (30, 39, 46) consists of a plastics material, the internal thread (34) thereof is formed by a metal threaded part (33) which is inserted in or moulded into the bearing part (30, 39, 46).

7. Pipe bracket according to one or more of claims 1 to 6, characterised in that the bearing part (60) comprises at least one clamping part (62, 63) which is vertically adjustable perpendicularly to the face (5) of the sectional beam flange (2) and thus radially to the pipe (6), and that the clamping part (62, 63) lies against the pipe (6) on one side and against the bearing part (5) or against the face (5) of the sectional beam flange (2) on the other.

8. Pipe bracket according to one or more of claims 1 to 7, characterised in that the clamping part (62, 63) is disposed in a recess (61) in the bearing part (60) which extends radially to the pipe (6) and is open at least towards the pipe (6).

9. Pipe bracket according to one or more of claims 1 to 8, characterised in that the clamping part is a wedge which can be displaced parallel to the longitudinal extent of the pipe (6) in the recess, that the wedge face of the wedge lies against a corresponding mating surface formed by the bearing part, that the wedge face is formed so as to rise in the direction of the clamping element (10) and the pipe (6), and that the clamping element (10) penetrates the bearing part in a freely rotatable manner and acts positively on the wedge.

10. Pipe bracket according to one or more of claims 1 to 8, characterised in that the clamping part is formed by two wedges (62, 63) which can be displaced parallel to the longitudinal extent of the pipe (6) in the recess (61) and lie with their wedge faces (64, 65) one on top of the other radially to the pipe (6), that the wedge faces (64, 65) of the wedges (62, 63) which correspond to one another are formed so as to slope downward in the direction of the clamping element (10) and away from the pipe (6), and that the clamping element (10) penetrates the bearing part (60) in a freely rotatable manner and acts positively on the wedge (63) of the clamping part which is remote from the pipe (6).

11. Pipe bracket according to one or more of claims 1 to 10, characterised in that at least the wedge (62) lying against the pipe (6) is formed from a slidable plastics material.

12. Pipe bracket according to one or more of claims 1 to 11, characterised in that the slidable plastics material is a polyamide.

13. Pipe bracket according to one or more of claims 1 to 12, characterised in that the holding element (17, 22, 35, 37, 44, 47) is a metal strap of a circular or rectangular material cross section.

14. Pipe bracket according to one or more of claims 1 to 13, characterised in that the free end of the holding element (17, 22, 35, 37, 44, 47) embraces the edge (3) of the sectional beam flange (2) with a hook-shaped end formation (21, 27, 28).

15. Pipe bracket according to one or more of claims 1 to 14, characterised in that the holding element (17, 22, 35, 37) is guided on the bearing part (7, 26, 30, 36, 60) on the side which faces the clamping element (10) around at least one projection (16, 24, 25, 31, 51, 52), which is located on the bearing part (7, 26, 30, 36), and lies against this projection under the action of the clamping element (10).

16. Pipe bracket according to claim 15, characterised in that the projection (24, 25, 51, 52) is formed by appropriately shaping the bearing part (26, 36, 60).

17. Pipe bracket according to one or more of claims 1 to 15, characterised in that the projection (16, 31) is formed by a shaped part which is inserted in the bearing part (7, 30).

18. Pipe bracket according to claim 17, characterised in that the shaped part is a metal pin (16, 53) which is pushed or screwed into the bearing part (7, 30).

19. Pipe bracket according to one or more of claims 1 to 18, characterised in that the holding element (22, 35, 37) comprises a portion which is bent back in the direction of its positive engagement with the edge (3) of the sectional beam flange (2) on the side of the projection (24, 25, 31) which faces the pipe (6).

20. Pipe bracket according to one or more of claims 1 to 14, characterised in that the holding element (44, 47) engages with at least one extension (42, 43), which is directed transversely to the clamping action of the clamping element (10), in a matching bore (40, 41) or recess (48) in the bearing part (39, 46).

21. Pipe bracket according to one or more of claims 1 to 20, characterised in that the holding element (22) is secured against displacement on the bearing part transversely to the clamping action of the clamping element (10) (Figures 9 and 10).

22. Pipe bracket according to claim 21, characterised in that the projection (52, 53) of the bearing part embraces the holding element (22) at least partly transversely to the clamping direction of the clamping element (10).

## Revendications

1. Support de conduite pour le serrage sur des supports de profils avec une pièce d'appui pour la conduite placée contre une surface d'une bride de support de profil et pouvant être attachée au moyen d'un élément de serrage abouté au support de profil au moins indirectement avec l'un des bords de la bride du support de profil et avec un élément de support disposé de façon raccordée à la pièce d'appui, entourant éventuellement la conduite,
caractérisé en ce que,
contre l'action de serrage de l'élément de serrage (10), d'une part la pièce d'appui (7, 26, 30, 36, 39, 46, 60) avec l'élément de support (17, 22, 35, 37, 44, 47) et, d'autre part, au moins une extrémité libre de l'élément de support (17, 22, 35, 37, 44, 47) avec le bord (3) de la bride du support de profil (2) se trouvent bloquées par engagement positif.

2. Support de conduite selon la revendication 1, caractérisé en ce que l'élément de support (17, 22, 35, 37, 44, 47) se trouve positionné contre la surface (5) de la bride du support de profil (2) dans la zone située entre le blocage par engagement positif sur la pièce d'appui (7, 26, 30, 36, 39, 46, 60), d'une part, et le bord (3) de la bride du support de profil (2), d'autre part.

3. Support de conduite selon la revendication 1 ou 2, caractérisé en ce que la pièce d'appui (7, 26, 30, 36, 39, 46, 60) est conçue comme un élément de construction en métal ou en plastique capable de glisser en forme de bloc présentant un moyen pour connecter par engagement positif l'élément de serrage (10).

4. Support de conduite selon une ou plusieurs des revendications 1 à 3, caractérisé en ce qu'une pièce en forme de plaque (8) en plastique pouvant glisser est logée pour recevoir la conduite (6) au niveau d'une pièce d'appui (7, 26, 36) en métal dans sa surface supérieure orientée vers la conduite (6).

5. Support de conduite selon une ou plusieurs des revendications 1 à 4, caractérisé en ce que l'élément de serrage est une vis de serrage (10) dont le filet se trouve en position d'engagement dans un filet de vis intérieur (9, 34, 67) de la pièce d'appui (7, 26, 30, 36, 39, 46, 60), en ce que la vis de serrage (10) avec son extrémité opposée à la pièce d'appui (7, 26, 30, 36, 39, 46, 60) est aboutée par l'intermédiaire d'une mâchoire de serrage (11) traversée par celle-ci de façon pivotante et en ce que la mâchoire de serrage (11) entoure l'autre bord (4) de la bride du support de profil (2).

6. Support de conduite selon une ou plusieurs des revendications 1 à 5, caractérisé en ce que, au niveau d'une pièce d'appui (30, 39, 46) en plastique, son filet de vis intérieur (34) est formé par l'intermédiaire d'une pièce filetée (33) en métal montée ou moulée dans la pièce d'appui (30, 39, 46).

7. Support de conduite selon une ou plusieurs des revendications 1 à 6, caractérisé en ce que la pièce d'appui (60) comporte au moins une pièce de serrage (62, 63) pouvant être ajustée en hauteur, perpendiculairement à la surface (5) de la bride du support de profil (2), et de ce fait, radialement à la conduite (6), et en ce que la pièce de serrage (62, 63) vient s'appuyer, d'une part contre la conduite (6) et, d'autre part, contre la pièce d'appui ou contre la surface (5) de la bride du support de profil (2).

8. Support de conduite selon une ou plusieurs des revendications 1 à 7, caractérisé en ce que la pièce de serrage (62, 63) est disposée dans une cavité (61) de la pièce d'appui (60), qui s'étend radialement à la conduite (6) et ouverte au moins jusqu'à la conduite (6).

9. Support de conduite selon une ou plusieurs des revendications 1 à 8, caractérisé en ce que l'élément de serrage est une clavette pouvant être déplacée dans la cavité parallèlement à la trajectoire longitudinale de la conduite (6), en ce que la surface de clavette de la clavette s'appuie contre une contre-surface correspondante formée par la pièce d'appui, en ce que la surface de la clavette est conçue de façon montante dans la direction de l'élément de serrage (10) et de la conduite (6), et en ce que l'élément de serrage (10) traverse la pièce d'appui de façon à pivoter librement et agit sur la clavette par engagement positif.

10. Support de conduite selon une ou plusieurs des revendications 1 à 8, caractérisé en ce que l'élément de serrage est formé de deux clavettes (62, 63) superposées au niveau de leurs surfaces de clavettes (64, 65) pouvant être déplacées dans la cavité parallèlement à la trajectoire longitudinale de la conduite (6) et radialement à la conduite (6), en ce que les surfaces de clavettes (64, 65) des clavettes (62, 63) mutuellement correspondantes sont conçues de façon continuellement inclinée dans la direction de l'élément de serrage (10) et depuis la conduite (6), et en ce que l'élément de serrage (10) traverse la pièce d'appui (60) de façon à pivoter librement et agit par ailleurs sur la clavette (63) opposée à la conduite (6) de la pièce de serrage par engagement positif.

11. Support de conduite selon une ou plusieurs des revendications 1 à 10, caractérisé en ce qu'au moins la clavette (62) qui se trouve positionnée sur la conduite (6) est fabriquée dans un plastique pouvant glisser.

12. Support de conduite selon une ou plusieurs des revendications 1 à 11, caractérisé en ce que le plastique pouvant glisser est un polyamide.

13. Support de conduite selon une ou plusieurs des revendications 1 à 12, caractérisé en ce que l'élément de support (17, 22, 35, 37, 44, 47) est une pièce métallique recourbée en arc de section transversale structurelle circulaire ou rectangulaire.

14. Support de conduite selon une ou plusieurs des revendications 1 à 13, caractérisé en ce que l'extrémité libre de l'élément de support (17, 22, 35, 37, 44, 47) entoure le bord (3) de la bride du support de profil (2) avec une formation d'extrémité (21, 27, 28) en forme de crochet.

15. Support de conduite selon une ou plusieurs des revendications 1 à 14, caractérisé en ce que l'élément de support (17, 22, 35, 37) au niveau de la pièce d'appui (7, 26, 30, 36, 60) est guidé sur le côté orienté vers l'élément de serrage (10) autour d'au moins une partie faisant saillie (16, 24, 25, 31, 51, 52) disposée sur la pièce d'appui (7, 26, 30, 36) et qu'il prend appui sur celle-ci par l'action de l'élément de serrage (10).

16. Support de conduite selon la revendication 15, caractérisé en ce que la partie faisant saillie (24, 25, 51, 52) est conçue de par une mise en forme appropriée de la pièce d'appui (26, 36, 60).

17. Support de conduite selon une ou plusieurs des revendications 1 à 15, caractérisé en ce que la partie faisant saillie (16, 31) est conçue par une pièce usinée logée dans la pièce d'appui (7, 30).

18. Support de conduite selon la revendication 17, caractérisé en ce que la pièce usinée est un boulon en métal (16, 53) logé ou vissé dans la pièce d'appui (7, 30).

19. Support de conduite selon une ou plusieurs des revendications 1 à 18, caractérisé en ce que l'élément de support (22, 35, 37) présente sur le côté de la partie faisant saillie (24, 25, 31) orienté vers la conduite (6) une flexion vers l'arrière dans la direction de son emboîtement par engagement positif avec le bord (3) de la bride du support de profil (2).

20. Support de conduite selon une ou plusieurs des revendications 1 à 14, caractérisé en ce que l'élément de support (44, 47) s'engage avec au moins un prolongement (42, 43) orienté transversalement à l'action de serrage de l'élément de serrage (10) dans un alésage (40, 41) ou une cavité (48) prévu(e) à cet effet de la pièce d'appui (39, 46).

21. Support de conduite selon une ou plusieurs des revendications 1 à 20, caractérisé en ce que l'élément de support (22) sur la pièce d'appui est verrouillé contre un déplacement transversalement à l'action de serrage de l'élément de serrage (10) (figures 9 et 10).

22. Support de conduite selon la revendication 21, caractérisé en ce que la partie faisant saillie (52, 53) de la pièce d'appui entoure au moins pour partie l'élément de support (22) transversalement à la direction de serrage de l'élément de serrage (10).
